# EUROPÄISCHE PATENTSCHRIFT

(11) **EP 1 380 765 B1**
(45) Veröffentlichungstag und Bekanntmachung des Hinweises auf die Patenterteilung: **10.08.2005**
(21) Anmeldenummer: 03013692.3
(22) Anmeldetag: 17.06.2003
(51) Int. Cl.: F16D 21/06

(54) **Reibungskupplung**
Friction clutch
Embrayage à friction

(30) Priorität: 12.07.2002 DE 10231493; 10.08.2002 DE 10236806
(43) Veröffentlichungstag der Anmeldung: 14.01.2004
(73) Patentinhaber: ZF Sachs AG, 97424 Schweinfurt (DE)
(72) Erfinder: Orlamünder, Andreas, Dipl.-Ing., 97422 Schweinfurt (DE); Pagels, Olaf, 97493 Bergrheinfeld (DE); Kleuker, Christoph, Dipl.-Ing.(FH), 97469 Gochsheim (DE); Heiartz, Markus, Dipl.-Ing., 97084 Würzburg (DE); Vogt, Sebastian, Dipl.-Ing., 97616 Bad Neustadt (DE)

(56) Entgegenhaltungen:
- EP-A- 1 302 687
- DE-A- 10 238 403
- US-A1- 2002 060 118

## Beschreibung

Die vorliegende Erfindung betrifft eine Reibungskupplung, umfassend eine mit einer Gehäuseanordnung zur gemeinsamen Drehung um eine Drehachse gekoppelte Anpressplatte sowie eine sich bezüglich der Anpressplatte und der Gehäuseanordnung abstützende Kraftbeaufschlagungsanordnung.

Bei derartigen Reibungskupplungen werden die bei Durchführung von Betätigungsvorgängen erzeugten Kräfte bzw. Reaktionskräfte dann, wenn keine interne Abstützung in der Reibungskupplung selbst stattfindet, auf die Lager einer Antriebswelle, also beispielsweise Kurbelwellenlager, übertragen. Während dies bei herkömmlichen Kupplungen, bei welchen als Kraftbeaufschlagungsanordnungen Kraftspeicher eingesetzt werden und die zu derartigen Kräften führenden Betätigungsvorgänge Auskuppelvorgänge sind, jeweils nur vergleichsweise kurze Belastungen der Kurbelwellenlager erzeugt, sind bei Kupplungen, die durch Erzeugung einer Einrückkraft eingerückt gehalten werden, praktisch über die ganze Betriebsdauer hinweg derartige Kräfte vorhanden. Dies führt zu einer nahezu kontinuierlichen axialen Belastung der Kurbelwellenlager, für welche diese im Allgemeinen nicht ausgelegt sind.

Es kann daher vorgesehen werden, die Reaktionskraft, die bei Durchführung von Betätigungsvorgängen erzeugt wird, in der Kupplung selbst abzustützen. Zu diesem Zwecke kann eine Lagerungsanordnung vorgesehen sein, die unter Erzeugung einer Drehentkopplung eine Abstützung bezüglich einer Gehäuseanordnung erzeugt.

Aus der US 2002/0060118 A1 ist eine gattungsgemaße Reibungskupplung bekannt, bei der eine Lagerungsanordnung zur Beaufschlagung einer Anpressplatte über ein Betätigungssystem vorgesehen ist und die Lagerungsanordnung unter dauernder Axialvorlast steht zur Sicherung derselben in diese Richtung.

Es ist die Aufgabe der vorliegenden Erfindung, eine Reibungskupplung vorzusehen, bei welcher bei Erzeugung einer internen Kraftabstützung eine präzise Lagezuordnung der verschiedenen Systemkomponenten gewährleistet ist.

Erfindungsgemäß wird diese Aufgabe bei einer Reibungskupplung, umfassend wenigstens eine mit einer Gehäuseanordnung zur gemeinsamen Drehung um eine Drehachse gekoppelte Anpressplatte, eine sich bezüglich der Anpressplatte und der Gehäuseanordnung abstützende Kraftbeaufschlagungsanordnung, eine Lagerungsanordnung zur Abstützung einer in einem Betätigersystem bei Durchführung eines Betätigungsvorgangs erzeugten Reaktionskraft an der Gehäuseanordnung, wobei die Lagerungsanordnung bezüglich der Gehäuseanordnung in beiden axialen Richtungen gegen Bewegung abgestützt ist, gelöst indem die Gehäuseanordnung zusammen mit einem Halteelement eine Aussparung zur Aufnahme eines die Lagerungsanordnung in einer axialen Richtung abstützenden Sicherungselements bildet.

Eine weitere erfindungsgemäße Ausgestaltungsform sieht vor, dass an der Gehäuseanordnung ein die Lagerungsanordnung in einer ersten axialen Richtung abstützendes erstes Halteelement festgelegt ist und ein die Lagerungsanordnung in einer zweiten axialen Richtung abstützendes zweites Halteelement festgelegt ist.

Durch das Abstützen der Lagerungsanordnung in beiden axialen Richtungen ist gewährleistet, dass nicht nur in derjenigen Richtung, in welcher eine Kraft zwischen der Lagerungsanordnung und der Gehäuseanordnung bei Durchführung von Betätigungsvorgängen erzeugt wird, eine definierte Endlage erzeugt ist, sondern auch in der anderen Richtung, was insbesondere bei der Durchführung von Montagevorgängen zum Erreichen einer präzisen, spielfreien Montagelage vorteilhaft ist.

Um dabei zur Erlangung der Erfindungsprinzipien möglichst wenig Bauteile bereithalten zu müssen, kann dann weiter vorgesehen sein, dass das Halteelement die Lagerungsanordnung in der anderen axialen Richtung abstützt. Alternativ kann dabei weiter vorgesehen sein, dass an der Gehäuseanordnung ein Abstützabschnitt zur Abstützung der Lagerungsanordnung in der anderen axialen Richtung gebildet ist.

Bei einer alternativen sehr leicht herzustellenden Art der Festlegung der Lagerungsanordnungen in beiden axialen Richtungen ist vorgesehen, dass die Lagerungsanordnung durch eine Mehrzahl von stiftartigen Abstützorganen an der Gehäuseanordnung in beiden axialen Richtungen abgestützt ist.

Gemäß einer weiteren alternativen Ausgestaltungsform ist vorgesehen, dass an einer Lagerkomponente der Lagerungsanordnung ein Gewinde ausgebildet ist, das mit einem an der Gehäuseanordnung ausgebildeten Gewinde in Eingriff steht.

Auch kann eine sehr einfach herstellbare Kopplung wieder dadurch erlangt werden, dass wenigstens eines der Halteelemente ein Gewinde aufweist, welches mit einem Gewinde an der Gehäuseanordnung in Eingriff steht. Weiter ist es möglich, dass eines der Halteelemente durch Rasteingriff an der Gehäuseanordnung gehalten ist. In diesem Falle kann beispielsweise vorgesehen sein, dass das eine Halteelement Haltezungen aufweist, welche das andere Halteelement hintergreifen.

Die Lagerungsanordnung kann beispielsweise eine Gleitlagerungsanordnung umfassen, wobei ein erstes Gleitlagerelement axial an einem ersten Halteelement abgestützt ist und ein zweites Gleitlagerelement axial an einem zweiten Halteelement abgestützt ist. Wenigstens eines dieser Gleitlagerelemente kann gleichzeitig zur radialen Zentrierung einen Radiallagerungsbereich aufweisen. Das Gleitlager kann trocken- oder nasslaufend sein, wobei eine Abdichtung vorgesehen sein kann. Bei der Gleitlagerungsanordnung kann vorzugsweise eine Dichtungsanordnung vorgesehen sein zur im Wesentlichen schmiermitteldichten Kapselung der Lagerungsanordnung. Es kann also in den Bereich der reibend aneinander abgleitenden Oberflächen dann Schmiermittel eingespeist werden, beispielsweise über eine zu lagernde Komponente, so dass eine sehr reibungsarme Lagerung erreicht werden kann und gleichzeitig durch die Dichtungsanordnung zumindest insoweit eine Abdichtung erlangt werden kann, dass nur geringe Leckageverluste vorhanden sind.

Bei einer weiteren alternativen Ausgestaltung der Erfindung kann vorgesehen sein, dass an der Lagerungsanordnung ein Sicherungselement vorgesehen ist, dass die Gehäuseanordnung an einer ersten axialen Seite des Sicherungselements abgestützt ist und dass ein mit der Gehäuseanordnung axial festgekoppeltes Halteelement an einer zweiten axialen Seite des Sicherungselements axial abgestützt ist. Das Halteelement kann mit der Gehäuseanordnung durch Vernieten, Verschweißen, Verlöten, Verkleben, Verformen, durch Presspassung o. dgl., fest verbunden sein.

Bei einer weiteren alternativen Ausgestaltungsform kann vorgesehen sein, dass die Lagerungsanordnung an einem Einsatzelement in beiden axialen Richtungen abgestützt ist und dass das Einsatzelement an der Gehäuseanordnung fest angebracht oder anbringbar ist. Dabei kann das Einsatzelement einen Axialanschlag zur Abstützung der Lagerungsanordnung in einer ersten axialen Richtung aufweisen und kann ein Sicherungselement zum Abstützen der Lagerungsanordnung in der zweiten axialen Richtung aufweisen.

Die erfindungegemäße Reibungskupplung kann beispielsweise als Doppelkupplung mit einem ersten Kupplungsbereich und einem zweiten Kupplungsbereich, jeweils umfassend eine Anpressplatte und eine Kraftbeaufschlagungsanordnung, sein. In diesem Falle kann für jeden der Kupplungsbereiche ein Betätigungssystem vorgesehen sein, das durch eine erfindungsgemäße Art der Ankopplung an eine Gehäuseanordnung dann für einen internen Kraftrückschluss in der Kupplung sorgt. Selbstverständlich sei darauf hingewiesen, dass die erfindungsgemäße Reibungskupplung auch eine herkömmliche Einscheibenkupplung oder Mehrscheibenkupplung sein kann, für welche nur ein einziges Betätigersystem erforderlich ist.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht einer erfindungsgemäßen Reibungskupplung;
- Fig. 2: eine Detailansicht einer Lagerungsanordnung an einem Gehäuse der in Fig. 1 dargestellten Reibungskupplung;
- Fig. 3: eine der Fig. 2 entsprechende Ansicht einer alternativen Ausgestaltungsform der Ankopplung;
- Fig. 4: eine der Fig. 2 entsprechende Ansicht einer alternativen Ausgestaltungsform der Ankopplung;
- Fig. 5: eine der Fig. 2 entsprechende Ansicht einer alternativen Ausgestaltungsform der Ankopplung;
- Fig. 6: eine der Fig. 2 entsprechende Ansicht einer alternativen Ausgestaltungsform der Ankopplung;
- Fig. 7: eine der Fig. 2 entsprechende Ansicht einer alternativen Ausgestaltungsform der Ankopplung;
- Fig. 8: eine der Fig. 2 entsprechende Ansicht einer alternativen Ausgestaltungsform der Ankopplung;
- Fig. 9: eine der Fig. 2 entsprechende Ansicht einer alternativen Ausgestaltungsform der Ankopplung;
- Fig. 10: eine der Fig. 2 entsprechende Ansicht einer weiteren alternativen Ausgestaltungsform der Ankopplung;
- Fig. 11: eine Abwandlung der in Fig. 10 gezeigten Ausgestaltungsform;
- Fig. 12: eine Abwandlung der in Fig. 10 gezeigten Ausgestaltungsform;
- Fig. 13: eine Abwandlung der in Fig. 10 gezeigten Ausgestaltungsform;
- Fig. 14: eine weitere der Fig. 2 entsprechenden Ansicht einer alternativen Ausgestaltungsform;
- Fig. 15: eine weitere Detailansicht der Ankopplung einer Lagerungsanordnung, welche hier als Gleitlagerungsanordnung ausgebildet ist;
- Fig. 16: eine Abwandlung der in Fig. 15 dargestellten Ausgestaltungsform.

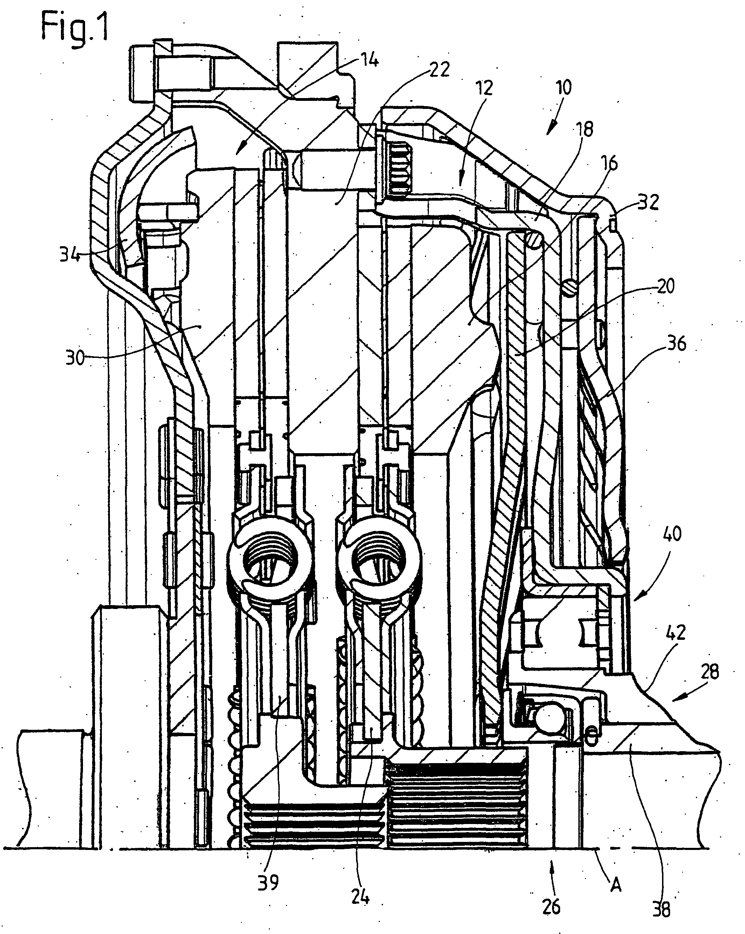

In Fig. 1 ist eine als Doppelkupplung aufgebaute Reibungskupplung allgemein mit 10 bezeichnet. Die Reibungskupplung 10 umfasst zwei Kupplungsbereiche 12, 14. Der erste Kupplungsbereich 12 weist eine Anpressplatte 16 auf, die in einer Gehäuseanordnung 18 drehfest, in gewissem Ausmaß jedoch in Richtung einer Drehachse A bewegbar gehalten ist. Durch eine Kraftbeaufschlagungsanordnung 20, die sich in ihrem radial äußeren Bereich an der Gehäuseanordnung 18 abstützt, kann die Anpressplatte 16 in Richtung auf eine Zwischenplatte 22 zu gepresst werden, so dass die Reibbeläge einer Kupplungsscheibe 24 zwischen der Anpressplatte 16 und der Zwischenplatte 22 eingeklemmt werden. Die Kraftbeaufschlagungsanordnung 20 kann mehrere in Umfangsrichtung um die Drehachse verteilt angeordnete und sich im Wesentlichen radial erstreckende Hebelelemente umfassen, die untereinander gekoppelt sein können und die im radial inneren Bereich über ein Betätigungslager 26 durch einen allgemein mit 28 bezeichneten Betätigungsmechanismus beaufschlagt werden können. Es ist selbstverständlich, dass als Kraftbeaufschlagungsanordnung 20 auch ein Kraftspeicher, beispielsweise Membranfeder, eingesetzt werden kann, der, im Falle einer gedrückten Kupplung ebenso innen über das Lager 26 beaufschlagt werden kann, wie auf die Anpressplatte 16 zu zum Erlangen eines Einrückzustands zu zu bewegende Hebelelemente.

Der Kupplungsbereich 14 umfasst eine Kupplungsscheibe 30, welche durch zwei gehäuseartig bzw. schalenartig aufgebaute und durch nicht dargestellte Kopplungsorgane gekoppelte Kraftübertragungselemente 32, 34 und durch eine weitere Kraftbeaufschlagungsanordnung 36, welche sich an der Außenseite der Gehäuseanordnung 18 abstützt, in Richtung auf die Zwischenplatte 22 zu vorgespannt werden kann. Dabei können dann die Reibbeläge einer Kupplungsscheibe 39 zwischen der Anpressplatte 30 und der Zwischenplatte 22 geklemmt werden. Dem zweiten Kupplungsbereich 14 bzw. der Kraftbeaufschlagungsanordnung 36 desselben kann in entsprechender Weise ein Betätigungsmechanismus zugeordnet sein. Auch die Kraftbeaufschlagungsanordnung 36 kann mehrere in Umfangsrichtung aufeinander folgende und ggf. untereinander gekoppelte Hebelelemente umfassen, die dann bei entsprechender Erregung des Betätigungsmechanismus eine Einrückkraft übertragen. Grundsätzlich ist es aber auch hier denkbar, einen in Einrückrichtung vorspannenden Kraftspeicher einzusetzen.

Der in der Fig. 1 dargestellte Betätigermechanismus 28 ist im Bereich einer ersten Betätigerkomponente 38 über das bereits angesprochene Lager 26 an der Kraftbeaufschlagungsanordnung 28 abgestützt. Über eine nachfolgend noch detaillierter erläuterte Lagerungsanordnung 40 ist eine zweite Betätigerkomponente 42 bezüglich der Gehäuseanordnung 18 abgestützt. Die beiden Betätigerkomponenten 38, 42 sind bei Durchführung eines Betätigungsvorgangs bezüglich einander in Richtung der Drehachse A verlagerbar, beispielsweise dadurch, dass sie in gewindeartigem oder rampenartigem Eingriff stehen und bei Relativdrehung bezüglich einander sich auch axial bezüglich einander verschieben. Grundsätzlich könnte aber auch die Betätigerkomponente 42 einen Nehmerzylinder bilden, in welchem die Betätigerkomponente 38 als Nehmerkolben verschiebbar ist. Hier sind verschiedenste Betätigermechanismen einsetzbar.

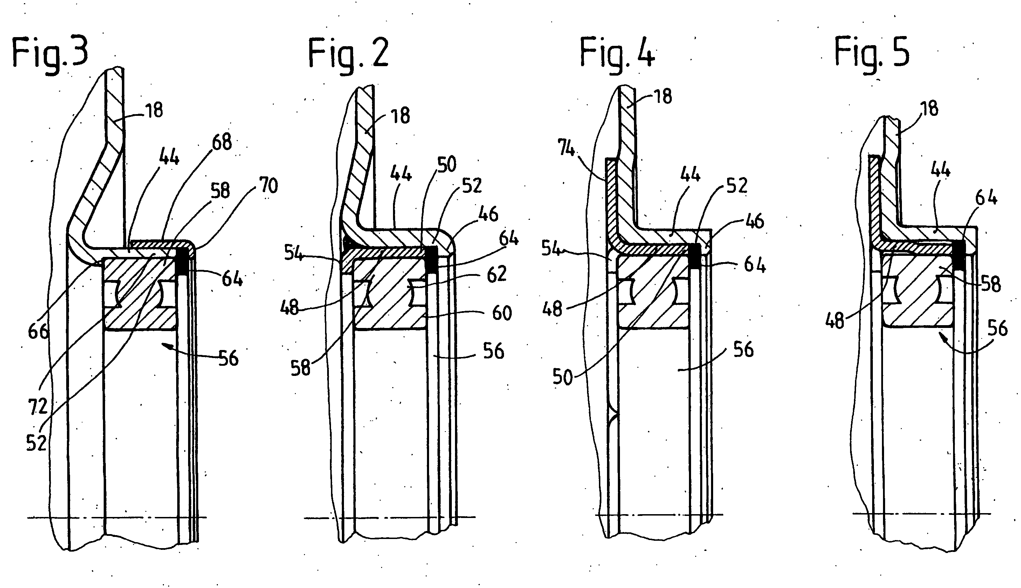

Die in Fig. 1 gezeigte Lagerungsanordnung 40 ist in Fig. 2 detaillierter dargestellt. Man erkennt in der Fig. 2 die Gehäuseanordnung 18, die in ihrem radial inneren Endbereich einen im Wesentlichen axial sich erstreckenden, vorzugsweise ringartig umlaufenden Ansatz 44 bildet. Dieser weist an seinem axial freien Endbereich einen nach innen greifenden Vorsprungsbereich 46 auf. Ein aus Blechmaterial gebildetes ringartiges Halteelement 48 ist in den Ansatz 44 eingeschoben und ist mit der Gehäuseanordnung 18 durch Verschweißung, Einpressen oder in sonstiger Weise fest verbunden. Ein axialer Endbereich 50 des Einsatzes 48 liegt in axialem Abstand zu dem nach innen greifenden Vorsprungsbereich 46, so dass hier ein Zwischenraum 52 gebildet ist. Im anderen axialen Endbereich bildet das Halteelement 48 einen nach radial innen greifenden Abstützvorsprungsbereich 54. Beim Zusammenfügen des in der Fig. 1 dargestellten Systems wird der Betätigungsmechanismus 28 mit dem daran bereits getragenen Wälzkörperlager 56 der Lagerungsanordnung 40 axial in den Ansatz 44 bzw. den Einsatz 48 desselben eingeführt. Ein äußerer Lagerring 58 kommt zur Anlage an dem Vorsprungsbereich 54, so dass das gesamte Lager 56, welches mit seinem inneren Lagerring 60 auf dem Betätigermechanismus 28 getragen ist und überdies beispielsweise kugelartige oder nadelartige Wälzkörper 62 aufweisen kann, in definierter Axiallage zum Liegen kommt. Daraufhin kann in den Zwischenraum 52 ein Sicherungsring 64 eingesetzt werden, welcher dann das Lager 56 in der anderen axialen Richtung fixiert.

Auf diese Art und Weise wird das den wesentlichen Bestandteil der Lagerungsanordnung 40 bildende Lager 56 an der Gehäuseanordnung 18 in beiden axialen Richtungen festgelegt, so dass von Anbeginn an eine definierte Positionierung des Betätigermechanismus 28, welcher das Lager 56 trägt, bezüglich der Gehäuseanordnung 18 und somit bezüglich der gesamten Reibunsgkupplung 10 vorgesehen ist.

Es ist selbstverständlich, dass, ebenso wie der Ansatz 44 und der Vorsprungsbereich 46, auch das Einsatzteil 48 nicht vollständig ringartig durchgehend ausgebildet sein muss, sondern beispielsweise im Bereich des Vorsprungsbereichs 54 einzelne Umfangssegmente aufweisen kann oder mit einzelnen Umfangssegmenten in den Ansatz 44 eingesetzt sein kann, während der Vorsprungsbereich 54 dann ringartig durchgehend ausgebildet ist. Dies trifft auch für nachfolgend noch beschriebene Ausgestaltungsformen zu, in welchen ein entsprechendes Einsatzteil vorhanden ist.

In Fig. 3 ist eine Abwandlung gezeigt, bei welcher kein derartiges Einsatzteil vorhanden ist. Vielmehr ist an dem Ansatz 44 der Gehäuseanordnung 18 ein stufenartiger Vorsprung 66 gebildet, welcher den Anschlag für den äußeren Lagerring 58 bildet. An der anderen Seite ist wieder der Sicherungsring 64 zur axial festen Fixierung des Lagers 56 vorgesehen. Dieser stufenartige Vorsprung 66 kann beispielsweise durch Prägen oder durch spanabhebende Bearbeitung erhalten werden.

Man erkennt weiter, dass der Ansatz 44 zum Ermöglichen des Bildens des stufenartigen Vorsprungs 66 nicht mehr einen nach innen greifenden Vorsprungsbereich aufweist, sondern dass ein separates Aufsteckelement 68 vorgesehen ist, welches außen auf den Ansatz 44 aufgesteckt und damit beispielsweise verschweißt, verklemmt oder daran in sonstiger Weise festgelegt ist und einen nach radial innen greifenden Vorsprungsbereich 70 aufweist, der zusammen mit dem axialen Endbereich 72 des Ansatzes 44 die Ausnehmung 52 für den Sicherungsring bildet.

Bei der in Fig. 4 dargestellten Ausgestaltungsform ist wieder ein Einsatzteil 48 vorhanden, das nunmehr eine Mehrzahl von entgegengesetzt zum Vorsprungsbereich 54 nach radial außen greifenden Zungen 74 aufweist, in deren Bereich durch Punktschweißen die Festlegung des Einsatzteils 48 an der Gehäuseanordnung 18 erfolgen kann. Ansonsten entspricht diese Ausgestaltungsform im Wesentlichen der in Fig. 2 dargestellten Ausgestaltungsform.

Die in Fig. 5 dargestellte Ausgestaltunsform entspricht im Wesentlichen der in Fig. 4 dargestellten. Man erkennt jedoch, dass das Einsatzteil 48 in seinem in den Einsatz 44 eingeschobenen Bereich leicht abgeköpft ist, um eine federelastische Passung für den Außenring 58 des Lagers 56 vorzusehen.

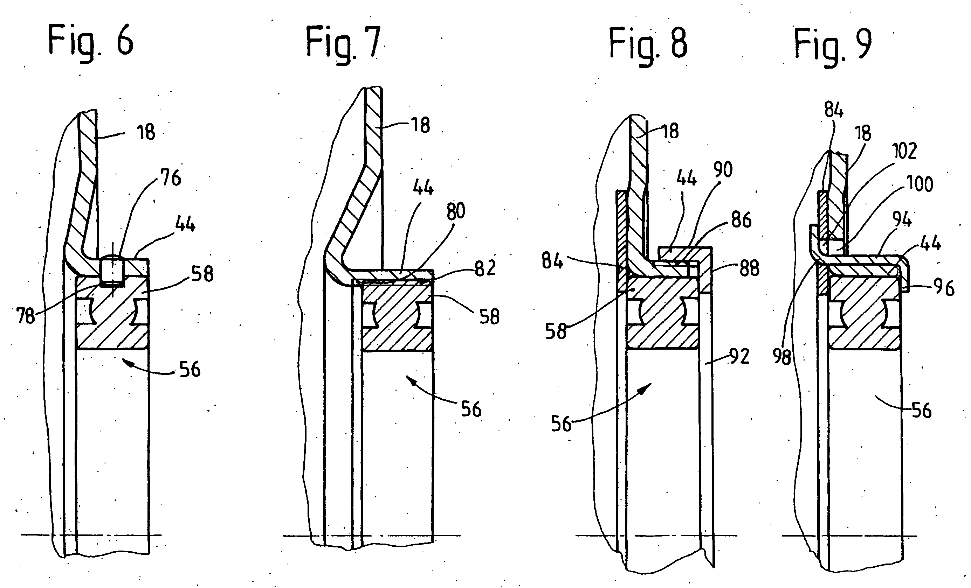

In Fig. 6 ist eine Ausgestaltungsform gezeigt, bei welcher in dem im Wesentlichen axial sich erstreckenden Ansatz 44 der Gehäuseanordnung 18 Durchtrittsöffnungen vorgesehen sind, in welche jeweilige Befestigungsstifte 76 eingesetzt sind. Diese können durch Gewindeeingriff, durch Verpressen, Verschweißen o. dgl. am Ansatz 44 gehalten sein. Im äußeren Lagerring 58 ist eine in Umfangsrichtung vorzugsweise durchlaufende Nut 78 vorgesehen, in welche die Stifte 76 im Wesentlichen axial spielfrei eingreifen und somit für die Fixierung des Lagers 56 bezüglich der Gehäuseanordnung 18 sorgen.

Bei der in Fig. 7 dargestellten Ausgestaltungsform ist der im Wesentlichen axial sich erstreckende Ansatz der Gehäuseanordnung 18 mit einem Innengewinde 80 versehen. In entsprechender Weise ist am äußeren Lagerring 58 ein Außengewinde 82 vorgesehen, so dass das Lager 56 durch Gewindeeingriff definiert an der Gehäuseanordnung 18 gehalten ist. Hier kann beispielsweise durch das Ende des Außengewindes 80 die axiale Positionierung des Lagers 56 vorgegeben sein. Auch ist es möglich, das Lager 56 nach dem Einschrauben durch Verklebung oder in sonstiger Weise fest am Ansatz 44 zu sichern.

In Fig. 8 ist eine Ausgestaltungsform gezeigt, bei welcher ein beispielsweise ringscheibenartig ausgebildetes Halteelement 84 an der Gehäuseanordnung 18 beispielsweise durch Verschweißung festgelegt ist und mit seinem radial inneren Bereich nach radial innen über die Innenumfangsfläche des Ansatzes 44 greift. Somit ist für den äußeren Lagerring 58 in einer axialen Richtung ein Anschlag bereitgestellt. Der Ansatz 44 ist hier mit einem Außengewinde 86 ausgebildet. Ein weiteres hülsenartiges Halteelement 88 weist in einem axial sich erstreckenden Bereich ein Innengewinde 90 auf und bildet mit einem nach radial innen greifenden flanschartigen Ansatz 92 einen das Lager 56 in der anderen axialen Richtung abstützenden Bereich.

In Fig. 9 ist das bereits in Fig. 8 erkennbare Halteelement 84 z. B. durch Verschweißung an der Gehäuseanordnung 18 festgelegt. Es ist ein weiteres ringartiges Halteelement 94 vorgesehen, das mit einem nach radial innen greifenden Ansatz 96 das Lager 56 axial festlegt und das mit zungenartigen Abschnitten 98 Öffnungen 100, 102 in der Gehäuseanordnung 18 und im Halteelement 84 durchsetzt und somit das Halteelement 84 hintergreift. Diese Zungen 98 können nach dem axialen Hindurchführen durch die Öffnungen 100, 102 nach radial innen bzw. radial außen umgebogen werden, oder können durch Rastwirkung in die in Fig. 9 gezeigte Stellung gelangen.

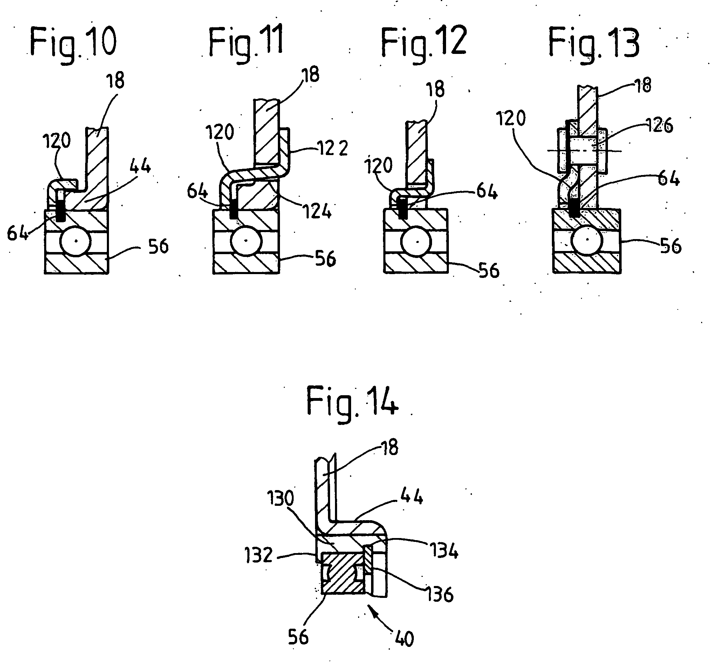

Bei der in Fig. 10 gezeigten Ausgestaltungsform ist am Außenumfangsbereich des Lagers 56, also eines Lageraußenrings desselben, in eine Umfangsnut ein Sicherungsring 64 eingesetzt. An diesem Sicherungsring 64 liegt ein axial freies Ende des Ansatzes 44 der Gehäuseanordnung 18 an. Ein Haltering 120 mit näherungsweise L-förmigem Querschnitt ist außen über den Ansatz 44 geschoben und liegt mit seinem nach radial innen greifenden Schenkel an der anderen axialen Seite des Sicherungsrings 64 an. Der Haltering 120 kann mit der Gehäuseanordnung 18 durch Aufpressen, Verschweißen, Verlöten, Verkleben o. dgl., fest verbunden sein. Da auch bei dieser Ausgestaltungsform die Gehäuseanordnung 18 mit dem axialen Ansatz 44 auf dem Lager 56 aufliegt, wird hier eine vergleichsweise großflächige Anlage erlangt.

Bei der in Fig. 11 gezeigten Abwandlung durchgreift das Halteelement 120 mit Zungenabschnitten 122 Öffnungen 124 in der Gehäuseanordnung 18, wobei diese Zungenabschnitte 122 an der anderen axialen Seite der Gehäuseanordnung 18, also der vom Sicherungsring 64 entfernten axialen Seite, dann zur Erlangung eines axial festen Zusammenhalts umgebogen werden.

In Fig. 12 ist eine Ausgestaltungsform gezeigt, bei welcher die Gehäuseanordnung 18 nicht mit dem axialen Ansatz 44, sondern mit einer Innenstirnfläche, deren Breite im Wesentlichen der Materialstärke der Gehäuseanordnung 18 in diesem Bereich entspricht, am Lager 56 aufliegt. Ansonsten entspricht die hier gezeigte Ausgestaltungsform der in Fig. 11 gezeigten.

Bei der in Fig. 13 gezeigten Ausgestaltungsform ist das ringförmige Halteelement 120 mit der Gehäuseanordnung 18 im radial inneren Bereich derselben durch mehrere Nietbolzen 126 fest verbunden. Auch hier liegt die Gehäuseanordnung 18 wieder mit einer Innenstirnfläche am Lager 56 auf.

In Fig. 14 ist eine Ausgestaltungsform gezeigt, bei welcher in den axialen Ansatz 44 der Gehäuseanordnung 18 ein Einsatzelement 130 eingesetzt ist. Dieses weist an einem axialen Ende einen beispielsweise ringförmigen Vorsprung 132 auf, der einen Axialanschlag für das Lager 56 bildet. An der anderen axialen Seite ist in dem Einsatzelement 130 eine Ringnut 134 gebildet, in welcher ein Sicherungsring 136 eingesetzt ist. Auch somit ist also das Lager 56 bezüglich des Einsatzelements 130 axial festgehalten. Das Einsatzelement 130 wiederum ist mit der Gehäuseanordnung 18 fest verbunden, beispielsweise durch Verschweißen, Verkleben oder durch Presspassung. Ein wesentlicher Vorteil dieser Ausgestaltungsform ist, dass verschiedene Lagergrößen beim gleichen Typ einer Gehäuseanordnung 18 eingesetzt werden können, wobei dann zur Durchmesseranpassung lediglich entsprechend geformte Einsatzelemente 130 ausgewählt werden müssen. Diese Einsatzelemente 130 sind vorzugsweise aus thermisch isolierendem Material aufgebaut, um eine Wärmeübertragung zwischen der Gehäuseanordnung 18 und dem Lager 56 soweit als möglich zu unterbinden.

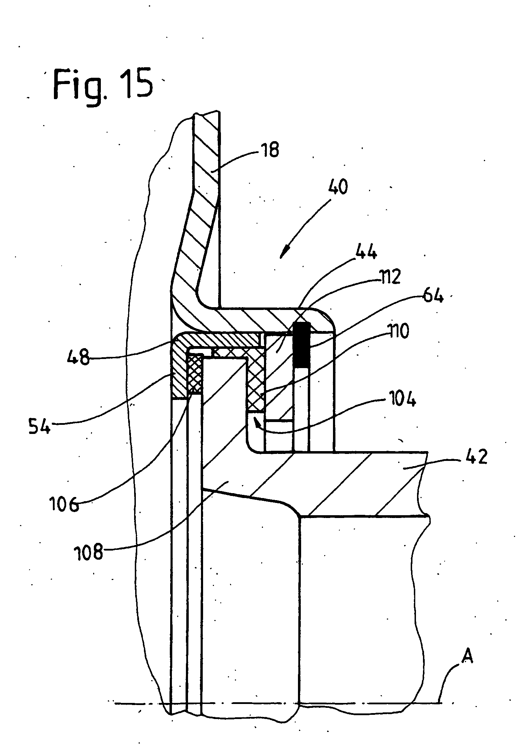

In Fig. 15 ist eine Ausgestaltungsform gezeigt, bei welcher die Lagerungsanordnung 40 ein allgemein mit 104 bezeichnetes Gleitlager umfasst. Dieses weist ein erstes ringartiges Gleitlagerelement 106 auf, das an einer axialen Seite eines flanschartigen Vorsprungs 108 des Betätigerteils 42 vorgesehen ist. Ein zweites mit L-förmigem Querschnitt ausgebildetes Gleitlagerelement 110 liegt mit seinem radial sich erstreckenden L-Abschnitt an der anderen axialen Seite des Ansatzes 108 an und liegt mit seinem im Wesentlichen axial sich erstreckenden L-Schenkel an einer Außenumfangsfläche dieses Ansatzes 108 an. In den Ansatz 44 der Gehäuseanordnung 18 ist wieder ein Einsatzteil 48 eingesetzt, das mit seinem nach radial innen greifenden Vorsprungsbereich 54 die Axialfixierung in einer ersten Richtung vorgibt, wobei das erste Gleitlagerelement 106 am Vorsprungsbereich 54 abgestützt ist. Das zweite Gleitlagerelement 110 ist über einen Stützring 112 an einem Sicherungsring 64 abgestützt, der in eine im Ansatz 44 vorgesehene Innenumfangsnut eingesetzt ist.

Auch bei dieser Ausgestaltungsform ist eine definierte Axialpositionierung der Lagerungsanordnung 40 und somit auch des Betätigerteils 42 bezüglich der Gehäuseanordnung 18 vorgesehen. Auf Grund der Tatsache, dass das Einsatzteil 48 beispielsweise wiederum durch Verschweißung mit der Gehäuseanordnung 18 fest verbunden ist, sind hier definierte Anlagebereiche vorhanden, in welchen unter Einsatz der Lagerelemente 106, 110 Gleitreibung erzeugt wird.

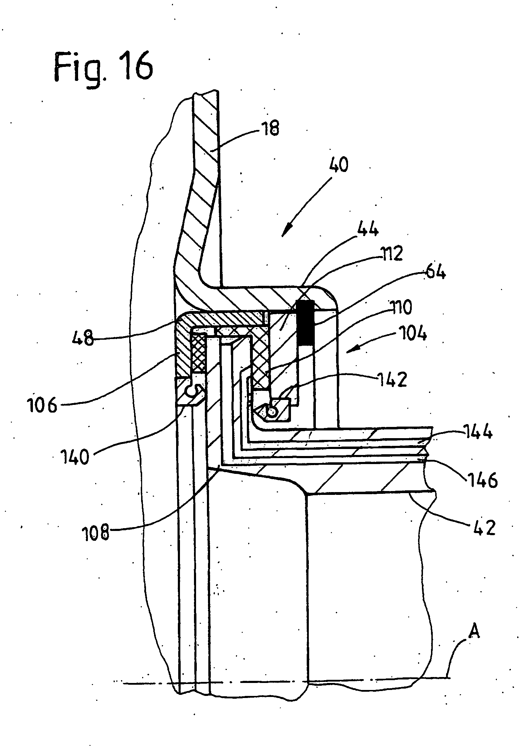

Die Fig. 16 zeigt eine Variante der vorangehend beschriebenen Ausgestaltungsform, bei welcher die Lagerungsanordnung 40 geschmiert ist. Man erkennt, dass am Innenumfangsbereich des Einsatzteils 48, also radial innerhalb des Gleitlagerelements 106, sowie am radial inneren Bereich des Stützrings 112, also radial innerhalb des Gleitlagerelements 110, jeweils ein ringartiges Dichtungselement 140 bzw. 142 vorgesehen ist. Diese Dichtungselemente 140, 142 liegen mit jeweiligen Dichtlippenbereichen an dem nach radial außen greifenden und zwischen den Gleitlagerelementen 106, 110 liegenden flanschartigen Vorsprung 108 an. Unter Einsatz dieser beiden Dichtungselemente 140, 142 und in Zusammenwirkung mit dem Einsatzteil 48, dem Gleitlagerelement 110 und dem Ansatz 44 der Gehäuseanordnung 18 wird also eine im Wesentlichen schmiermitteldichte Abkapselung der Gleitlagerungsanordnung 104 erhalten. In diesen abgekapselten Raumbereich kann über zwei in dem Betätigerteil 42 verlaufende Schmiermittelkanäle 144, 146 Schmiermittel eingeleitet bzw. aus diesem Bereich auch wieder abgezogen werden, so dass beispielsweise durch Anschluss an den Schmiermittelkreislauf eines Getriebes auch im Bereich der Lagerungsanordnung 40 eine Schmiermittelzirkulation erlangt werden kann. Somit wird ein sehr reibungsarmes Gleitlager erhalten, bei welchem aufgrund der Kühlwirkung des zirkulierenden Schmiermittels, also beispielsweise Getriebeöls, gleichzeitig auch eine Überhitzung vermieden werden kann. Es ist selbstverständlich, dass die Kanäle 144, 146 in anderen Bereichen des gekapselten Raums offen sein können, also beispielsweise Bereiche, die nicht direkt durch ein Gleitlagerelement 106, 110 abgedeckt sind, wie z.B. der zwischen dem Dichtungselement 142 und dem radial inneren Bereich des Gleitlagerelements 110 liegende Raumbereich.

Zu den in den Fig. 15 und 16 gezeigten Ausgestaltungsformen sei noch angeführt, dass die dort mit den Bezugszeichen 106 und 110 bezeichneten Gleitlagerelemente zur Erlangung definierter Reibverhältnisse beispielsweise an dem Betätigerteil 42, nämlich dem flanschartigen Vorspruch 108 desselben, drehfest gehalten sein können, beispielsweise durch Verklebung, Vernietung oder dergleichen, um dann eine Gleitbewegung in Anlage an dem Einsatzteil 48 bzw. dem Stützring 112 zu vollziehen. Auch die umgekehrte Anordnung, bei welcher die Gleitlagerelemente 106, 110 an den Bauteilen 48 bzw. 112 festgehalten sind und somit am flanschartigen Vorsprung 108 gleitend reiben, ist möglich.

Es sei darauf hingewiesen, dass selbsverständlich der für die Kraftbeaufschlagungsanordnung 36 vorzusehende Lagerungsbereich so ausgebildet sein kann, wie vorangehend beschrieben. Auch ist es selbstverständlich, dass die erfindungsgemäße Ausgestaltung des Lagerungsbereichs dann zum Einsatz kommen kann, wenn die Reibungskupplung nicht als Doppelkupplung sondern als Einfachkupplung ausgebildet ist

## Patentansprüche

1. Reibungskupplung, umfassend wenigstens eine mit einer Gehäuseanordnung (18) zur gemeinsamen Drehung um eine Drehachse (A) gekoppelte Anpressplatte (16, 30), eine sich bezüglich der Anpressplatte (16, 30) und der Gehäuseanordnung (18) abstützende Kraftbeaufschlagungsanordnung (20, 36), eine Lagerungsanordnung (40) zur Abstützung einer in einem Betätigersystem (28) bei Durchführung eines Betätigungsvorgangs erzeugten Reaktionskraft an der Gehäuseanordnung (18), **dadurch gekennzeichnet, dass** die Lagerungsanordnung (40) bezüglich der Gehäuseanordnung (18) in beiden axialen Richtungen gegen Bewegung abgestützt ist, und dass
die Gehäuseanordnung (18) zusammen mit einem Halteelement (48, 68, 120) eine Aussparung (52) zur Aufnahme eines die Lagerungsanordnung (40) in einer axialen Richtung abstützenden Sicherungselements (64) bildet.

2. Reibungskupplung, umfassend wenigstens eine mit einer Gehäuseanordnung (18) zur gemeinsamen Drehung um eine Drehachse (A) gekoppelte Anpressplatte (16, 30), eine sich bezüglich der Anpressplatte (16, 30) und der Gehäuseanordnung (18) abstützende Kraftbeaufschlagungsanordnung (20, 36), eine Lagerungsanordnung (40) zur Abstützung einer in einem Betätigersystem (28) bei Durchführung eines Betätigungsvorgangs erzeugten Reaktionskraft an der Gehäuseanordnung (18), **dadurch gekennzeichnet, dass** die Lagerungsanordnung (40) bezüglich der Gehäuseanordnung (18) in beiden axialen Richtungen gegen Bewegung abgestützt ist, und dass
an der Gehäuseanordnung (18) ein die Lagerungsanordnung (40) in einer ersten axialen Richtung abstützen des erstes Halteelement (84; 48) festgelegt ist und ein die Lagerungsanordnung (40) in einer zweiten axialen Richtung abstützendes zweites Halteelement (88; 94; 112) festgelegt ist.

3. Reibungskupplung nach Anspruch 1 oder 2,
**dadurch gekennzeichnet, dass** das Halteelement (48) die Lagerungsanordnung (40) in der anderen axialen Richtung abstützt.

4. Reibungskupplung nach Anspruch 1 oder 2,
**dadurch gekennzeichnet, dass** an der Gehäuseanordnung (18) ein Abstützabschnitt (66) zur Abstützung der Lagerungsanordnung (40) in der anderen axialen Richtung gebildet ist.

5. Reibungskupplung nach dem Oberbegriff von Anspruch 1,
**dadurch gekennzeichnet, dass** die Lagerungsanordnung (40) bezüglich der Gehäuseanordnung (18) in beiden axialen Richtungen gegen Bewegung abgestützt ist und dass die Lagerungsanordnung (40) durch eine Mehrzahl von stiftartigen Abstützorganen (76) an der Gehäuseanordnung (18) in beiden axialen Richtungen abgestützt ist.

6. Reibungskupplung nach dem Oberbegriff von Anspruch 1 ,
**dadurch gekennzeichnet, dass** die Lagerungsanordnung (40) bezüglich der Gehäuseanordnung (18) in beiden axialen Richtungen gegen Bewegung abgestützt ist und dass an einer Lagerkomponente (58) der Lagerungsanordnung (40) ein Gewinde (82) ausgebildet ist, das mit einem an der Gehäuseanordnung (18) ausgebildeten Gewinde (80) in Eingriff steht.

7. Reibungskupplung nach Anspruch 2,
**dadurch gekennzeichnet, dass** wenigstens eines (88) der Halteelemente (84, 88) ein Gewinde (86) aufweist, welches mit einem Gewinde (90) an der Gehäuseanordnung (18) in Eingriff steht.

8. Reibungskupplung nach Anspruch 2 oder 7,
**dadurch gekennzeichnet, dass** eines (94) der Halteelemente (84, 94) durch Rasteingriff an der Gehäuseanordnung (18) gehalten ist.

9. Reibungskupplung nach Anspruch 8,
**dadurch gekennzeichnet, dass** das eine Halteelement (94) Haltezungen (98) aufweist, welche das andere Halteelement (84) hintergreifen.

10. Reibungskupplung nach Anspruch 2,
**dadurch gekennzeichnet, dass** die Lagerungsanordnung (40) eine Gleitlagerungsanordnung (104) umfasst, wobei ein erstes Gleitlagerelement (106) axial an dem ersten Halteelement (48) abgestützt ist und ein zweites Gleitlagerelement (110) axial an dem zweiten Halteelement (112) abgestützt ist.

11. Reibungskupplung nach Anspruch 10,
**dadurch gekennzeichnet, dass** wenigstens eines der Gleitlagerelemente (106, 110) einen Radiallagerungsbereich aufweist.

12. Reibungskupplung nach Anspruch 10 oder 11,
**dadurch gekennzeichnet, dass** eine Dichtungsanordnung (140, 142) zur im Wesentlichen schmiermitteldichten Abkapselung der Lagerungsanordnung (40) vorgesehen ist.

13. Reibungskupplung nach Anspruch 1 oder 2,
**dadurch gekennzeichnet, dass** an der Lagerungsanordnung (40) ein Sicherungselement (64) vorgesehen ist, dass die Gehäuseanordnung (18) an einer ersten axialen Seite des Sicherungselements (64) axial abgestützt ist und dass ein mit der Gehäuseanordnung (18) axial festgekoppeltes Halteelement (120) an einer zweiten axialen Seite des Sicherungselements (64) axial abgestützt ist.

14. Reibungskupplung nach Anspruch 13,
**dadurch gekennzeichnet, dass** das Halteelement (120) mit der Gehäuseanordnung durch Vernieten, Verschweißen, Verlöten, Verkleben, Verformen oder durch Presspassung fest verbunden ist.

15. Reibungskupplung nach Anspruch 1 oder 2,
**dadurch gekennzeichnet, dass** die Lagerungsanordnung (40) an einem Einsatzelement (130) in beiden axialen Richtungen abgestützt ist und dass das Einsatzelement (130) an der Gehäuseanordnung (18) fest angebracht oder anbringbar ist.

16. Reibungskupplung nach Anspruch 15,
**dadurch gekennzeichnet, dass** das Einsatzelement einen Axialanschlag (132) zum Abstützen der Lagerungsanordnung (40) in einer ersten axialen Richtung aufweist und ein Sicherungselement (136) zur Abstützung der Lagerungsanordnung (40) in der zweiten axialen Richtung aufweist.

17. Reibungskupplung nach einem der Ansprüche 1 bis 16,
**dadurch gekennzeichnet, dass** die Reibungskupplung (10) eine Doppelkupplung mit einem ersten Kupplungsbereich (12) und einem zweiten Kupplungsbereich (14), jeweils umfassend eine Anpressplatte (16, 30) und eine Kraftbeaufschlagungsanordnung (20, 36), ist.

## Claims

1. Friction clutch comprising at least one pressure plate (16, 30) which is coupled to a housing arrangement (18) for the purpose of common rotation about a rotational axis (A), a force application arrangement (20, 36) which is supported on the pressure plate (16, 30) and the housing arrangement (18), a bearing arrangement (40) for supporting a reaction force, generated in an activator system (28) when an actuation process is carried out, on the housing arrangement (18), **characterized in that** the bearing arrangement (40) is supported on the housing arrangement (18) against movement in both axial directions, and **in that** the housing arrangement (18) forms, together with a holding element (48, 68, 120), a recess (52) for receiving a securing element (64) which supports the bearing arrangement (40) in one axial direction.

2. Friction clutch comprising at least one pressure plate (16, 30) which is coupled to a housing arrangement (18) for the purpose of common rotation about a rotational axis (A), a force application arrangement (20, 36) which is supported on the pressure plate (16, 30) and the housing arrangement (18), a bearing arrangement (40) for supporting a reaction force, generated in an activator system (28) when an actuation process is carried out, on the housing arrangement (18), **characterized in that** the bearing arrangement (40) is supported on the housing arrangement (18) against movement in both axial directions, and **in that** a first holding element (84; 48) which supports the bearing arrangement (40) in a first axial direction is fixed to the housing arrangement (18) and a second holding element (88; 94; 112) which supports the bearing arrangement (40) in a second axial direction is fixed to the housing arrangement (18).

3. Friction clutch according to Claim 1 or 2, **characterized in that** the holding element (48) supports the bearing arrangement (40) in the other axial direction.

4. Friction clutch according to Claim 1 or 2, **characterized in that** a supporting section (66) for supporting the bearing arrangement (40) is formed in the other axial direction on the housing arrangement (18).

5. Friction clutch according to the preamble of Claim 1, **characterized in that** the bearing arrangement (40) is supported on the housing arrangement (18) against movement in both axial directions, and **in that** the bearing arrangement (40) is supported on the housing arrangement (18) in both axial directions by a plurality of pin-like supporting elements (76).

6. Friction arrangement according to the preamble of Claim 1, **characterized in that** the bearing arrangement (40) is supported on the housing arrangement (18) against movement in both axial directions, and **in that** a thread (82) which engages with a thread (80) formed on the housing arrangement (18) is formed on a bearing component (58) of the bearing arrangement (40).

7. Friction clutch according to Claim 2, **characterized in that** at least one (88) of the holding elements (84, 88) has a thread (86) which engages with a thread (90) on the housing arrangement (18).

8. Friction clutch according to Claim 2 or 7, **characterized in that** one (94) of the holding elements (84, 94) is held on the housing arrangement (18) by a latching engagement.

9. Friction clutch according to Claim 8, **characterized in that** one of the holding elements (94) has holding tongues (98) which engage behind the other holding element (84).

10. Friction clutch according to Claim 2, **characterized in that** the bearing arrangement (40) comprises a sliding bearing arrangement (104), wherein a first sliding bearing element (106) is supported axially on the first holding element (48) and a second sliding bearing element (110) is supported axially on the second holding element (112).

11. Friction clutch according to Claim 10, **characterized in that** at least one of the sliding bearing elements (106, 110) has a radial bearing region.

12. Friction clutch according to Claim 10 or 11, **characterized in that** a sealing arrangement (140, 142) is provided for essentially lubricant-tight encapsulation of the bearing arrangement (40).

13. Friction clutch according to Claim 1 or 2, **characterized in that** a securing element (64) is provided on the bearing arrangement (40), **in that** the housing arrangement (18) is supported axially on a first axial side of the securing element (64), and **in that** a holding element (120) which is permanently coupled in the axial direction to the housing arrangement (18) is supported axially on a second axial side of the securing element (64).

14. Friction clutch according to Claim 13, **characterized in that** the holding element (120) is permanently connected to the housing arrangement by riveting, welding, soldering, bonding, shaping or by a form fit.

15. Friction clutch according to Claim 1 or 2, **characterized in that** the bearing arrangement (40) is supported on an insert element (130) in both axial directions, and **in that** the insert element (130) is permanently attached, or can be permanently attached, to the housing arrangement (18).

16. Friction clutch according to Claim 15, **characterized in that** the insert element has an axial stop (132) for supporting the bearing arrangement (40) in a first axial direction, and has a securing element (136) for supporting the bearing arrangement (40) in the second axial direction.

17. Friction element according to one of Claims 1 to 16, **characterized in that** the friction clutch (10) is a double clutch having a first clutch region (12) and a second clutch region (14), each comprising a pressure plate (16, 30) and a force application arrangement (20, 36).

## Revendications

1. Embrayage à friction, comprenant au moins un plateau de pression (16, 30) couplé à un ensemble de carter (18) pour tourner conjointement autour d'un axe de rotation (A), un ensemble (20, 36) d'exercice de force s'appuyant contre le plateau de pression (16, 30) et l'ensemble de carter (18), un ensemble de palier (40) pour soutenir une force de réaction sur l'ensemble de carter (18) produite dans un système d'actionnement (28) lors de l'exercice d'un processus d'actionnement, **caractérisé en ce que** l'ensemble de palier (40) est soutenu par rapport à l'ensemble de carter (18) afin de ne se déplacer dans aucune des deux directions axiales, et **en ce que** l'ensemble de carter (18) forme conjointement avec un élément de retenue (48, 68, 120) un évidement (52) destiné à recevoir un élément d'assujettissement (64) soutenant l'ensemble de palier (40) dans une direction axiale.

2. Embrayage à friction, comprenant au moins un plateau de pression (16, 30) couplé à un ensemble de carter (18) pour tourner conjointement autour d'un axe de rotation (A), un ensemble (20, 36) d'exercice de force s'appuyant contre le plateau de pression (16, 30) et l'ensemble de carter (18), un ensemble de palier (40) pour soutenir une force de réaction sur l'ensemble de carter (18) produite dans un système d'actionnement (28) lors de l'exercice d'un processus d'actionnement, **caractérisé en ce que** l'ensemble de palier (40) est soutenu par rapport à l'ensemble de carter (18) afin de ne se déplacer dans aucune des deux directions axiales, et **en ce que** sont fixés sur l'ensemble de carter (18) un premier élément de retenue (84 ; 48) soutenant l'ensemble de palier (40) dans une première direction axiale et un deuxième élément de retenue (88 ; 94 ; 112) soutenant l'ensemble de palier (40) dans une deuxième direction axiale.

3. Embrayage à friction selon la revendication 1 ou 2, **caractérisé en ce que** l'élément de retenue (48) soutient l'ensemble de palier (40) dans l'autre direction axiale.

4. Embrayage à friction selon la revendication 1 ou 2, **caractérisé en ce qu'**une partie de soutien (66) est formée sur l'ensemble de carter (18) afin de soutenir l'ensemble de palier (40) dans l'autre direction axiale.

5. Embrayage à friction selon le préambule de la revendication 1, **caractérisé en ce que** l'ensemble de palier (40) est soutenu par rapport à l'ensemble de carter (18) afin de ne se déplacer dans aucune des deux directions axiales, et **en ce que** l'ensemble de palier (40) est soutenu dans les deux directions axiales par une pluralité d'organes de soutien (76) du genre pointes sur l'ensemble de carter (18).

6. Embrayage à friction selon le préambule de la revendication 1, **caractérisé en ce que** l'ensemble de palier (40) est soutenu par rapport à l'ensemble de carter (18) afin de ne se déplacer dans aucune des deux directions axiales, et **en ce qu'**un filetage (82) est formé sur un élément de palier (58) de l'ensemble de palier (40), filetage qui est en prise avec un filetage (80) configuré sur l'ensemble de carter (18).

7. Embrayage à friction selon la revendication 2, **caractérisé en ce qu'**au moins un (88) des éléments de retenue (84, 88) présente un filetage (86) qui est en prise avec un filetage (90) sur l'ensemble de carter (18).

8. Embrayage à friction selon la revendication 2 ou 7, **caractérisé en ce qu'**un (94) des éléments de retenue (84, 94) est maintenu par engagement cranté sur l'ensemble de carter (18).

9. Embrayage à friction selon 1a revendication 8, **caractérisé en ce que** l'un (94) des éléments de retenue présente des languettes de retenue (98) qui s'engagent derrière l'autre élément de retenue (84).

10. Embrayage à friction selon la revendication 2, **caractérisé en ce que** l'ensemble de palier (40) comprend un ensemble de palier lisse (104), sachant qu'un premier élément (106) de palier lisse est soutenu axialement sur le premier élément de retenue (48) et qu'un deuxième élément (110) de palier lisse est soutenu axialement sur le deuxième élément de retenue (112).

11. Embrayage à friction selon la revendication 10, **caractérisé en ce qu'**au moins un des éléments de palier lisse (106, 110) présente une région de palier radiale.

12. Embrayage à friction selon la revendication 10 ou 11, **caractérisé en ce qu'**un ensemble (140, 142) de joint d'étanchéité est prévu pour enfermer l'ensemble de palier (40) essentiellement en étanchéité au lubrifiant.

13. Embrayage à friction selon la revendication 1 ou 2, **caractérisé en ce qu'**un élément d'assujettissement (64) est prévu sur l'ensemble de palier (40), **en ce que** l'ensemble de carter (18) est soutenu axialement sur un premier côté axial de l'élément d'assujettissement (64), et **en ce qu'**un élément de retenue (120) fixement accouplé axialement à l'ensemble de carter (18) est soutenu axialement sur un deuxième côté axial de l'élément d'assujettissement (64).

14. Embrayage à friction selon la revendication 13, **caractérisé en ce que** l'élément de retenue (120) est fixement assemblé à l'ensemble de carter par rivetage, soudage, brasage, collage, déformation ou ajustement serré.

15. Embrayage à friction selon la revendication 1 ou 2, **caractérisé en ce que** l'ensemble de palier (40) est soutenu dans les deux directions axiales sur un élément d'insertion (130), et **en ce que** l'élément d'insertion (130) est ou peut être fixement installé sur l'ensemble de carter (18).

16. Embrayage à friction selon la revendication 15, **caractérisé en ce que** l'élément d'insertion présente une butée axiale (132) pour soutenir l'ensemble de palier (40) dans une première direction axiale et un élément d'assujettissement (136) pour soutenir l'ensemble de palier (40) dans la deuxième direction axiale

17. Embrayage à friction selon l'une des revendications 1 à 16, **caractérisé en ce que** l'embrayage à friction (10) est un embrayage double avec une première région d'embrayage (12) et une deuxième région d'embrayage (14), comprenant chacune un plateau de pression (16, 30) et un ensemble (20, 36) d'exercice de force.
